# FASCICULE DE BREVET EUROPEEN

(11) **EP 2 539 226 B1**
(45) Date de publication et mention de la délivrance du brevet: **14.05.2014**
(21) Numéro de dépôt: 11712648.2
(22) Date de dépôt: 25.02.2011
(51) Int. Cl.: B64C 7/02, B64C 21/02, B64D 27/18

(54) **DISPOSITIF DE REDUCTION DU BRUIT DES INTERACTIONS JET/PYLÔNE SUR TURBOREACTEURS**
VORRICHTUNG ZUR MINDERUNG VON GERÄUSCHEN AUS STRAHL-PYLON-INTERAKTIONEN BEI TRIEBWERKEN
DEVICE FOR REDUCING NOISE FROM JET-PYLON INTERACTIONS ON JET ENGINES

(30) Priorité: 26.02.2010 FR 1051376
(43) Date de publication de la demande: 02.01.2013
(73) Titulaire: Snecma, 75015 Paris (FR)
(72) Inventeur: DRAVET, Alain, F-13170 Les Pennes Mirabeau (FR); JULLIARD, Jacques, Michel, Albert, F-77850 Hericy (FR); LOHEAC, Pierre, Philippe, Marie, F-77170 Brie Compte-Robert (FR)
(74) Mandataire: Gevers France
(86) Numéro de dépôt international: PCT/FR2011/050399
(87) Numéro de publication internationale: WO 2011/104488

(56) Documents cités:
- EP-A1- 2 028 360
- FR-A1- 2 913 401
- GB-A- 2 138 507
- GB-A- 2 203 710

## Description

Le domaine de la présente invention est celui de l'aéronautique civile et en particulier, celui de la génération de bruit par les avions.

Le bruit généré par les avions civils, notamment au décollage, est une nuisance largement connue et de nombreuses innovations ont été imaginées pour tenter de le réduire. Une des principales sources de ce bruit réside dans le jet des moteurs, qui sont utilisés à leur pleine puissance lors de la phase de décollage. Des travaux importants ont bien évidemment été conduits pour tenter de réduire le bruit du jet des turboréacteurs, comme par exemple des chevrons en formes en dents de scie pour la tuyère d'éjection, que ce soit pour celle des gaz chauds, en provenance du flux primaire du réacteur, ou celle des gaz dits froids qui sont issus du flux secondaire du moteur.

Pour limiter les nuisances subies par les riverains des aéroports, des normes strictes ont été imposées, qui limitent le bruit que l'on peut percevoir en divers points situés autour de l'avion, à différentes distances et dans plusieurs directions par rapport à la piste d'envol.

Un des points particulièrement critiques à respecter par les concepteurs d'avions, en termes de bruit maximal admissible pour obtenir la certification d'un avion, se trouve dans une position latérale par rapport à l'avion, à une distance de 450 m de la piste de décollage. La présence du pylône, c'est-à-dire du mât qui supporte le moteur en le rattachant à l'aile, génère localement, au niveau de l'éjection des gaz, des niveaux élevés de turbulence dans l'écoulement, avec pour conséquence une augmentation très significative du bruit latéral du moteur. Ce phénomène est particulièrement aigu pour les configurations où le pylône est proéminent au-delà du plan d'éjection des gaz, ce qui devient une configuration très fréquente sur les avions civils récents.

Les résultats de calculs numériques ou de mesures réalisées sur maquette en soufflerie, montrent bien que les effets d'interactions entre le flux circulant autour du pylône et le pylône lui-même génèrent une augmentation notable des niveaux de turbulence et par suite, du niveau de bruit. Une modification importante du développement angulaire du jet radialement autour du pylône peut également être notée, qui tend à orienter le jet du turboréacteur autour du pylône, en direction de l'aile.

Par ailleurs, l'expérience acquise montre que l'introduction du pylône, outre son influence sur l'augmentation du niveau sonore sur une configuration d'éjection conventionnelle, peut également réduire considérablement l'efficacité d'autres dispositifs installés pour réduire le bruit des gaz d'échappement, tels que des chevrons ou des mélangeurs installés sur les tuyères. La présence du pylône vient également d'un point de vue aérodynamique modifier le développement initial du jet et par suite son mélange et sa signature sonore.

La présence du pylône introduit ainsi, en termes d'acoustique, un accroissement du bruit d'éjection au point latéral de certification, qui peut varier entre 2 à 3,5 EPNdB (Effective Perceived Noise, ou niveau de bruit effectivement perçu, en décibels) selon le cycle moteur, la taille du pylône et les géométries d'éjection considérées.

Des dispositifs, tels que ceux décrits dans les demandes de brevet FR 2913401, qui est consideré l'état de la technique le plus proche, ou GB 2138507, ont été imaginés pour contrôler la circulation de l'air autour d'un pylône porteur d'une turbomachine. Ils ne s'intéressent cependant pas au bruit généré au décollage par le cisaillement des vitesses entre le ou les flux chauds et le flux froid des turboréacteurs à double ou triple flux et n'ont pas d'impact sur la résolution du problème technique qui y est associé.

Le besoin de réduire le bruit de jet étant un souci constant des motoristes on voit bien l'intérêt qu'il y a à réduire le bruit à la source, c'est-à-dire en agissant sur les écoulements turbulents locaux autour et en aval du pylône. Le potentiel de réduction de bruit apparaît même, in fine, plus important que celui apporté par la mise en oeuvre de chevrons ou de micro-jets à la périphérie de la tuyère.

La présente invention a pour but de remédier à ces inconvénients de l'art antérieur en proposant un dispositif de réduction du bruit généré par un moteur monté sur le pylône d'un aéronef, et notamment du bruit associé à l'interaction entre le jet du moteur et l'écoulement de l'air autour du pylône.

A cet effet, l'invention a pour objet un pylône d'aéronef pour le support d'un turboréacteur à double ou triple flux, comportant une face supérieure de liaison à l'aéronef, deux flancs latéraux et une semelle à sa partie inférieure, ledit pylône comprenant au moins une partie s'étendant en aval de la tuyère du flux froid dudit turboréacteur et baignant dans ledit flux froid, caractérisé en ce qu'il comporte sur sa partie s'étendant dans le flux froid au-delà de ladite tuyère au moins un orifice positionné sur un des flancs dudit pylône, par lequel un jet d'air est injecté dans, ou aspiré depuis, le flux gazeux circulant le long de ses flancs.

L'injection d'un jet ou une aspiration du flux gazeux permet de modifier l'écoulement autour du pylône et ainsi, en orientant ce jet de façon appropriée, de réduire la formation des tourbillons entre le moteur et le pylône et ainsi de réduire le bruit de paroi qui est associé à la présence du pylône et au cisaillement des vitesses entre le flux froid et l'air extérieur au moteur. Elle améliore les écoulements sur les flancs et la partie inférieure du pylône et ainsi réduit l'intensité turbulente globale et donc le bruit en latéral, tout en contrôlant le développement initial du jet et donc son mélange.

Dans un mode de réalisation l'orifice est alimenté par un tube relié à une écope prélevant de l'air dans le flux froid du turboréacteur.

Dans un autre mode de réalisation l'orifice est alimenté par un tube relié à un piquage de prélèvement d'air à l'aval d'un compresseur du turboréacteur. Le choix entre le premier et le second mode de réalisation mentionnés ci-dessus est fonction de l'intensité nécessaire au jet pour réduire la formation des tourbillons contrarotatifs générés de part et d'autre des flancs du pylône.

Avantageusement l'air est injecté à une pression supérieure d'au moins 15% à la pression totale dudit flux gazeux. On produit ainsi un micro-jet plus rapide que le flux principal, ce qui assure une bonne efficacité au dispositif en apportant une énergie suffisante pour modifier significativement l'écoulement dans cette zone et produire moins de bruit, tout en minimisant le débit nécessaire injecté.

De façon préférentielle l'air est injecté selon une direction faisant horizontalement, au niveau dudit orifice, un angle compris entre 30° à 90° avec l'axe de l'écoulement du flux gazeux environnant le turboréacteur. Le choix de cette plage angulaire se justifie par la recherche d'une pénétration suffisante du micro-jet dans l'écoulement environnant le turboréacteur et ce, sans générer trop de pertes aérodynamiques.

De façon préférentielle l'air est injecté selon une direction faisant verticalement, au niveau dudit orifice, un angle compris entre +60° à -60° avec la direction perpendiculaire au flanc du pylône. Comme précédemment, le choix de la plage angulaire est déterminé par la recherche d'une efficacité optimale du dispositif à micro-jets.

Dans un mode particulier de réalisation le pylône comporte au moins un orifice positionné sur la partie de son flanc située en dehors du flux froid du turboréacteur. L'injection de fluide au travers de cet orifice vise également à réduire l'intensité turbulente des écoulements dans cette zone externe aux flux du moteur. La conséquence est un écoulement plus sain, et donc moins générateur de bruit, qui participe au mélange avec le flux secondaire.

Préférentiellement le pylône comporte au moins un orifice positionné sur sa semelle. L'injection de fluide au travers de cet orifice permet de réduire l'effet néfaste du pylône dans cette zone en réduisant la turbulence tout en refroidissant cette zone sensible. L'injection fluidique dans cette zone, permet également de contrôler le développement initial du jet et d'améliorer son mélange en modifiant notamment l'intensité des sources sonores ainsi que leurs localisations et leurs signatures acoustiques.

Dans un mode particulier de réalisation le pylône comporte en outre un carénage de raccordement d'un de ses flancs latéraux à la tuyère du flux chaud, et comporte au moins un orifice positionné sur ledit carénage.

L'invention porte également sur un aéronef comportant au moins un pylône tel que décrit ci-dessus.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue en coupe d'un turboréacteur attaché à une aile par un pylône selon l'art antérieur ;
- la figure 2 est une vue schématique d'un arrière-corps de moteur porté par un pylône équipé d'un dispositif selon un mode de réalisation de l'invention :
- la figure 3 est une vue schématique plus détaillée d'un arrière-corps de moteur porté par un pylône équipé d'un dispositif selon un mode de réalisation de l'invention ;
- la figure 4 est une vue de dessous de l'arrière-corps de la figure 2 ;
- La figure 5 est une vue de l'arrière de l'arrière-corps de la figure 2, en coupe au niveau du plan de sortie de la tuyère du flux froid ;
- la figure 6 est une vue schématique d'un premier mode de réalisation du système d'alimentation en air d'un pylône équipé d'un dispositif selon l'invention ;
- la figure 7 est une vue schématique d'un second mode de réalisation du système d'alimentation en air d'un pylône équipé d'un dispositif selon l'invention.

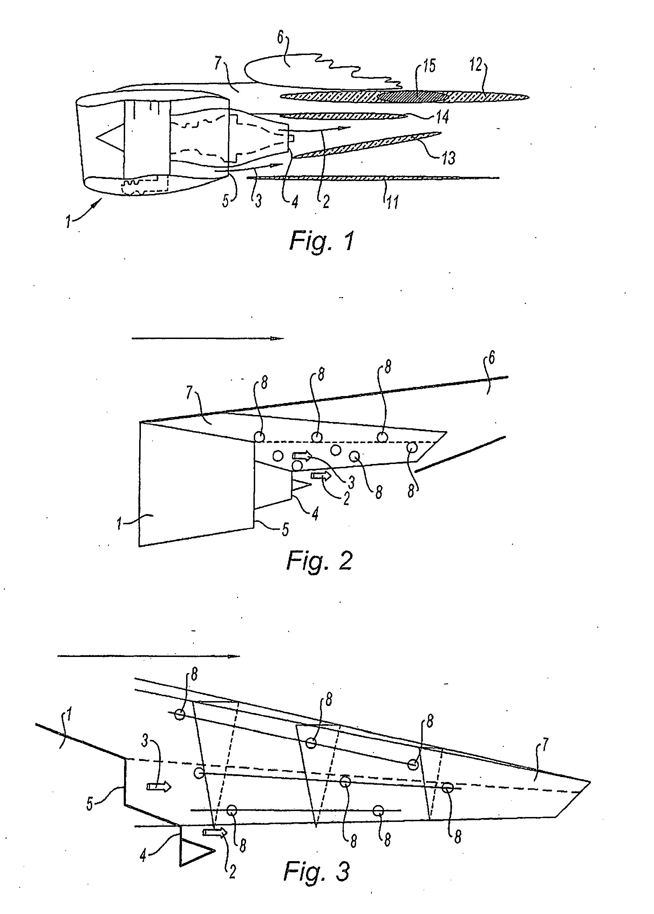

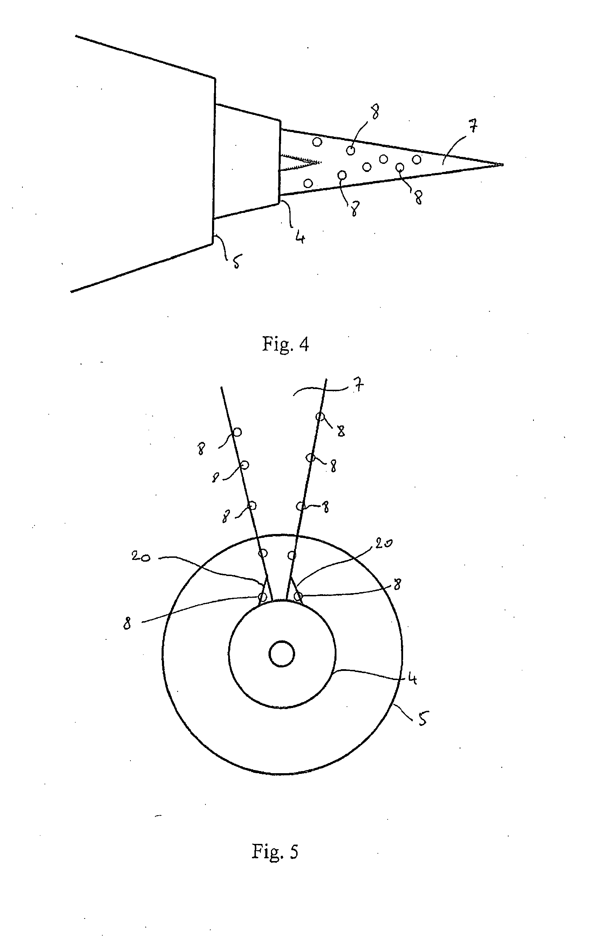

En se référant à la figure 1, on voit un moteur 1, du type turboréacteur à double flux, duquel s'échappent un flux primaire, ou flux chaud 2, et un flux secondaire, ou flux froid 3. Le flux chaud sort du moteur 1 au niveau d'une tuyère primaire 4 alors que le flux froid sort au niveau d'une tuyère secondaire 5. Le moteur 1 est attaché à une aile 6 d'un avion (non représenté) par l'intermédiaire d'un pylône de support 7. Le pylône 7 a une forme sensiblement plane avec une face supérieure de liaison à l'avion, deux flancs latéraux, représentés ici sensiblement verticaux et parallèles entre eux, et une face inférieure ou semelle. Des carénages 20, visibles sur la figure 5, forment un raccordement entre les flancs du pylône 7 et le haut de la tuyère primaire 4, de façon à assurer un écoulement aérodynamique propre au niveau de la jonction entre ces deux éléments. Le pylône 7 s'étend longitudinalement, c'est-à-dire dans le sens de l'écoulement de l'air autour du moteur, en aval du plan de sortie des tuyères 4 et 5 du moteur 1. Il s'étend par ailleurs vers le bas au travers du flux d'air externe et du flux froid 3, jusqu'à la limite constituée par le flux chaud 2, ceci pour éviter des détériorations qui seraient dues à la chaleur importante qu'atteignent les gaz dans ce flux. Sa semelle est cependant baignée par le flux chaud et soumises à de fortes températures.

Sur la figure 1 sont représentées des zones de turbulences, référencées de 11 à 15, qui se créent dans l'écoulement du flux issu du moteur, au niveau des cisaillements de vitesse entre les différents flux et qui sont génératrices du bruit de jet du moteur. Les zones 11 et 12 correspondent à la zone de mélange du flux froid, respectivement à sa partie inférieure et à sa partie supérieure, avec le flux d'air entourant le moteur, tandis que les zones 13 et 14 correspondent aux zones de mélange des flux froid et chaud. La zone 15 correspond à une turbulence particulière créée par la présence du pylône 7, à la partie supérieure du flux froid ; cette turbulence, par le cisaillement des vitesses qu'elle crée, provoque l'apparition d'un bruit, dit bruit de paroi, qu'il convient de réduire autant que possible pour obtenir la certification de l'avion au décollage. C'est précisément l'objet de l'invention.

En se référant maintenant aux figures 2 et 3 on voit un pylône 7, attaché à une aile 6 et placé, partiellement dans le flux d'air externe et partiellement dans le flux froid 3. Sur ce pylône sont pratiquées des ouvertures 8, placées de façon régulière sur le flanc latéral du pylône. Ces ouvertures sont ici représentées au nombre de huit, alignées selon trois lignes, une ligne haute, une ligne médiane et une ligne basse, qui courent sensiblement dans le sens de la plus grande dimension du pylône et qui tendent à couvrir l'ensemble de la surface latérale du pylône. La forme de ces orifices 8 est représentée sur les figures comme cylindrique, sans que ceci soit impératif. Ils sont, par ailleurs, représentés sur les figures 2 et 3, comme implantés sur la seule face visible du pylône 7 ; il est bien évident que des orifices analogues sont implantés sur l'autre flanc du pylône pour prendre en compte les turbulences créées par cette autre face dans les flux chaud 2 et flux froid 3.

La figure 4 montre, en vue de dessous, le pylône 7 qui s'étend en aval de la tuyère 4, et sa partie, ou semelle, située en dessous du pylône et baignée par le flux chaud 2. Celle-ci est également percée d'orifices 8 analogues à ceux pratiqués dans les flancs du pylône.

La figure 5 montre, en coupe au niveau de la sortie de la tuyère secondaire, le raccordement entre les flancs du pylône 7 et la tuyère primaire 4. Deux carénages de raccordements 20 assurent un écoulement aérodynamique propre entre ces deux éléments, qui sont, eux aussi, percés d'orifices 8, comme les flancs ou la semelle du pylône.

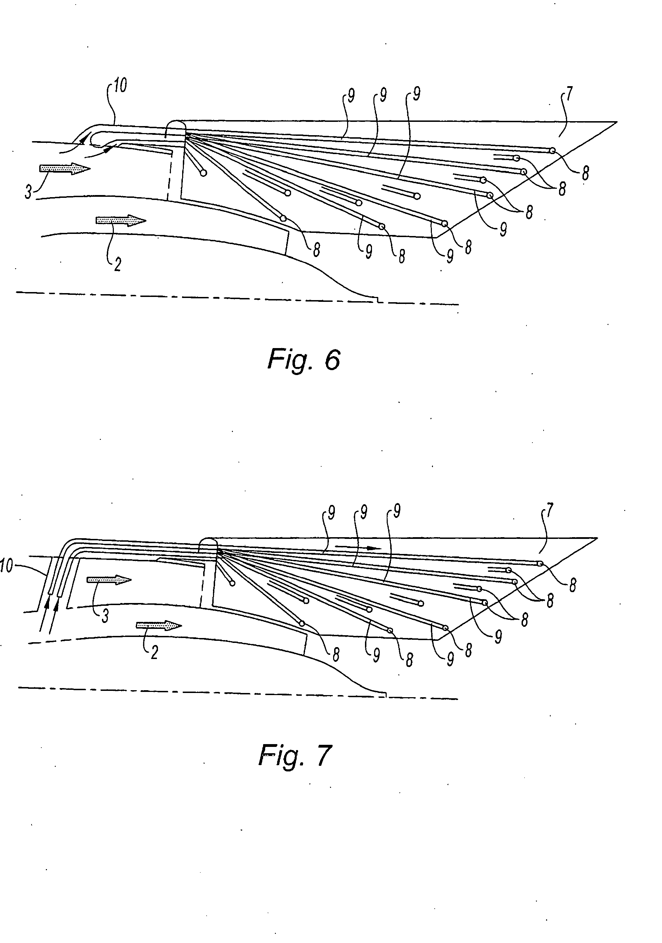

Les figures 6 et 7 montrent deux versions du système d'alimentation de ces orifices 8 par de l'air sous pression. Dans les deux variantes, des tubes 9, dont le diamètre correspond à celui des orifices 8, circulent à l'intérieur du pylône 7 entre un collecteur d'air 10 et les orifices 8. Dans la première variante de l'invention, représentée sur la figure 6, le collecteur 10 est une écope qui prélève de l'air dans le flux secondaire, alors que dans la seconde variante, représentée sur la figure 7, il est constitué par un piquage d'air comprimé pratiqué sur le compresseur haute pression du moteur, ce qui permet de fournir, si nécessaire, des pressions plus élevées que dans la première variante.

Il est couramment observé la présence de 2 tourbillons contrarotatifs qui sont générés sur les flancs du pylône. Ces derniers sont, comme indiqué plus haut, très pénalisants en ce qui concerne le bruit en latéral, par suite d'une augmentation de la turbulence au niveau et en aval du pylône. Cette augmentation est liée à la présence du pylône qui génère les deux écoulements tourbillonnaires mentionnés plus haut.

Afin de permettre de réduire la turbulence par une diminution des couches de cisaillements et une amélioration du mélange des flux dans cette zone, l'invention propose de distribuer des jets sur les flancs et/ou à la base du pylône 7, de façon à mieux maîtriser et contrôler les écoulements turbulents et les interactions flux/pylône dans cette région sensible. Ces jets sont répartis, dans le flux froid et la veine d'air entourant le moteur, sur plusieurs lignes parallèles à l'écoulement moyen, et à différentes hauteurs, avec des incidences d'injection qui sont fonction de l'aérodynamique du jet. L'idée nouvelle est ainsi d'obtenir une réduction du bruit d'éjection de l'installation motrice en agissant sur l'écoulement autour du pylône, par l'installation de dispositifs d'injection fluidique capables d'agir, via des jets, continus ou pulsés, sur les niveaux de turbulence pour dissiper celle-ci, sans générer de réelles pertes aérodynamiques.

Les dispositifs fluidiques intégrés proposés par l'invention sont préférentiellement des orifices 8 d'injection d'air mais peuvent être, de façon alternative, des orifices d'aspiration, ou plus généralement tout dispositif qui serait susceptible de modifier l'écoulement autour du pylône 7. Ces jets sont acheminés au travers du pylône par les tubes 9 et alimentés par exemple à partir d'un collecteur 10 intégré dans la partie amont du pylône 7. Les tubes 9, en injectant des jets sur les flancs du pylône permettent de modifier favorablement les écoulements instationnaires en réduisant les tourbillons contrarotatifs, ce qui facilite le mélange des flux dans cette zone de forte turbulence et diminue en conséquence d'une façon significative le bruit de jet du moteur en latéral.

Deux solutions sont envisagées pour approvisionner le collecteur 10 d'alimentation des jets : soit de l'air est capté par une écope dans le flux secondaire comme représenté sur la figure 6, soit il est prélevé, au niveau d'un piquage, sur le compresseur du flux primaire, comme représenté sur la figure 7, en faisant circuler l'air prélevé via par exemple un des bras structuraux qui est creux. Le choix entre les deux variantes dépendra du débit et de la pression requise pour le jet en sortie des orifices 8.

Les orifices 8 ont des dimensions qui dépendent de la taille du pylône, mais qui, pour les applications les plus courantes, ne dépassent pas, pour chacun d'eux, une taille de 4 cm², ceci afin d'éviter de générer du bruit parasite dans les moyennes fréquences ; leur taille est en revanche d'au moins 1 cm² pour avoir une bonne efficacité. Dans le cas où leur forme ne serait pas circulaire, le rapport entre les dimensions transverses de ces ouvertures ne doit, préférentiellement, pas dépasser la valeur trois.

Les caractéristiques techniques préférentielles pour le jet injecté sont décrites ci-après :
- en termes de pression d'injection du jet, il est préférable d'avoir une pression qui soit supérieure d'au moins 15% à celle de l'écoulement dans lequel il est injecté. Compte tenu de la zone d'injection qui est limitée à la partie du pylône 7 située en aval des tuyères du moteur, le débit total d'injection reste relativement faible par rapport au débit moteur et, est généralement inférieur à 0,2% du débit du flux secondaire. L'impact de ce prélèvement d'air sur la poussée au décollage reste donc très limité et parfaitement acceptable.
- la température des jets n'apparaissant pas comme très critique, le prélèvement d'air sur le moteur peut s'effectuer, sur ce plan, aussi bien en zone froide, au niveau de la veine secondaire, qu'au niveau du compresseur HP.
- les tubes 9 d'alimentation des jets, qui cheminent à l'intérieur du pylône 7 jusqu'aux orifices 8 de sortie, sont orientés, en fonction de la configuration du pylône 7, selon une direction qui varie horizontalement de 30° à 90° par rapport à l'axe de la veine d'air environnant le moteur et verticalement de +60° à -60° par rapport à la normale aux flancs du pylône. Le choix de ces plages angulaires se justifie par un besoin de pénétration des micro-jets dans l'écoulement principal sans toutefois générer trop de pertes aérodynamiques, ce qui exclut des incidences supérieures à 90° avec des injections dans une direction opposée aux écoulements produisant la poussée.

L'implantation sur le pylône 7 des orifices 8, le long des lignes haute, médiane et basse, est préférentiellement la suivante :

La ligne basse, qui est située à la base du pylône, comporte au moins deux orifices 8 sur chaque flanc du pylône 7. L'orientation des injections se fait vers la base du pylône de façon à agir sur la couche de cisaillement du mélange du flux chaud 2 avec le flux froid 3.

La ligne médiane, qui est située approximativement à mi-hauteur, sur la partie du pylône immergée dans le flux secondaire 3 comporte au moins trois orifices 8 sur chaque flanc du pylône 7. L'injection se fait horizontalement dans le sens de l'écoulement moyen et verticalement dans la plage angulaire définie précédemment.

La ligne haute, qui est située sur la partie supérieure du pylône 7, en dehors des flux moteur mais à proximité de la zone de cisaillement du flux secondaire 3 avec l'air externe comporte au moins trois orifices 8 répartis régulièrement sur la longueur de la partie du pylône située en aval de la tuyère. L'orientation de l'injection se fait vers la base du jet avec une orientation horizontale comme définie précédemment.

Le rôle de ces orifices est de permettre, au travers d'une injection de fluide, d'agir sur la composante instationnaire des écoulements principaux et notamment sur les écoulements turbulents au niveau de la couche limite ; ils agissent plus généralement sur la génération de tourbillons en décorrélant par exemple les grosses structures de tourbillon générées au niveau du pylône, qui sont à l'origine dans cette zone d'une contribution significative du bruit additionnel qui rayonne en latéral.

On trouve également des orifices 8, préférentiellement au nombre de quatre, qui sont situés à la base du pylône sur sa semelle comme illustré sur la figure 4. Ceux-ci sont disposés soit de manière rectiligne soit en quinconce, sur la semelle ; leur orientation se fait, axialement, dans le sens de l'écoulement et transversalement, dans la plage angulaire définie précédemment. L'intérêt de ces orifices est, outre la participation à la réduction du bruit, d'apporter de l'air à une température relativement basse pour refroidir la semelle du pylône qui est léchée par les gaz du flux chaud.

On trouve également des orifices 8, sur les carénages de tuyères 20 assurant un écoulement aérodynamique propre entre les flancs du pylône et le haut de la tuyère primaire, comme illustré sur la figure 7.

En conclusion l'invention apporte une solution simple pour réduire le niveau de bruit d'un avion au décollage, qui est plus efficace et qui ne nécessite pas d'installation complexe comme les solutions à base de jets implantés à la périphérie de la tuyère. Ce dispositif possède par ailleurs l'avantage d'être un dispositif dit actif, c'est-à-dire dont la mise en oeuvre est décidée à la demande. Il n'est a priori mis en service que durant la phase de décollage et il est désactivé en croisière, évitant ainsi de potentielles pertes de performances et un accroissement de la consommation spécifique en carburant.

Enfin un tel dispositif, agissant sur la réduction des interactions entre le flux des gaz et le pylône, agit également sur la cause de certains bruits additionnels, qui ont une origine autre que le cisaillement des jets et qui sont amplifiées par la présence de la voilure et des systèmes hypersustentateurs. Il concourt donc de façon très efficace à l'amélioration des performances aéroacoustiques globales de l'avion.

Bien que l'invention ait été décrite en relation avec un mode de réalisation particulier, il est bien évident qu'elle comprend tous les équivalents techniques des moyens décrits ainsi que leurs combinaisons si celles-ci entrent dans le cadre de l'invention. En particulier la description a été effectuée en considérant le cas d'un turboréacteur double flux, le pylône comprenant une partie qui est baignée dans le flux froid du turboréacteur et l'autre baignant dans le flux d'air extérieur au moteur. L'invention peut également être appliquée sur un pylône porteur d'un turboréacteur à triple flux, dont une partie est baignée dans son flux froid, les flux chauds primaire et secondaire étant éjectés en dessous de la semelle de ce pylône.

## Revendications

1. Pylône d'aéronef pour le support d'un turboréacteur (1) à double ou triple flux, comportant une face supérieure de liaison à l'aéronef, deux flancs latéraux et une semelle à sa partie inférieure, ledit pylône comprenant au moins une partie s'étendant en aval de la tuyère (5) du flux froid (3) dudit turboréacteur et baignant dans le flux froid, **caractérisé en ce qu'**il comporte sur sa partie s'étendant dans le flux froid au-delà de ladite tuyère au moins un orifice (8) positionné sur un des flancs dudit pylône, par lequel un jet d'air est injecté dans, ou aspiré depuis, le flux gazeux circulant le long de ses flancs.

2. Pylône selon la revendication 1 dans lequel l'orifice (8) est alimenté par un tube (9) relié à une écope (10) prélevant de l'air dans le flux froid (3) du turboréacteur (1).

3. Pylône selon la revendication 1 dans lequel l'orifice (8) est alimenté par un tube (9) relié à un piquage de prélèvement d'air à l'aval d'un compresseur du turboréacteur (1).

4. Pylône selon l'une des revendications 1 à 3 dans lequel l'air est injecté à une pression supérieure d'au moins 15% à la pression totale dudit flux gazeux.

5. Pylône selon l'une des revendications 1 à 4 dans lequel l'air est injecté selon une direction faisant horizontalement, au niveau dudit orifice (8), un angle compris entre 30° à 90° avec l'axe de l'écoulement du flux gazeux environnant le turboréacteur.

6. Pylône selon l'une des revendications 1 à 5 dans lequel l'air est injecté selon une direction faisant verticalement, au niveau dudit orifice (8), un angle compris entre +60° à -60° avec la direction perpendiculaire au flanc du pylône.

7. Pylône selon l'une des revendications 1 à 6 comportant en outre au moins un orifice (8) positionné sur la partie de son flanc située en dehors du flux froid (3) du turboréacteur (1).

8. Pylône selon l'une des revendications 1 à 7 comportant au moins un orifice (8) positionné sur sa semelle.

9. Pylône selon l'une des revendications 1 à 8 comportant en outre un carénage de raccordement (20) d'un de ses flancs latéraux à la tuyère du flux chaud (4), ledit pylône comportant au moins un orifice (8) positionné sur ledit carénage.

10. Aéronef comportant au moins un pylône selon l'une des revendications 1 à 9.

## Patentansprüche

1. Pylon für ein Luftfahrzeug zum Halten eines Zwei- oder Dreistrom-Turboluftstrahltriebwerks (1), enthaltend eine obere Fläche zur Verbindung mit dem Flugzeug, zwei Seitenteile und eine Bodenplatte an seinem unteren Teil, wobei der Pylon mindestens einen Teil aufweist, der sich unterhalb der Düse (5) des Mantelstroms (3) des Strahltriebwerks erstreckt und in den Mantelstrom eingetaucht ist, **dadurch gekennzeichnet, dass** er in seinem Teil, der sich in dem Mantelstrom über die Düse hinaus erstreckt, mindestens eine Öffnung (8) aufweist, die an einem der Seitenteile des Pylons positioniert ist, durch die ein Luftstrom in den entlang seiner Seitenteile zirkulierenden Gasstrom eingespritzt oder aus diesem angesaugt wird.

2. Pylon nach Anspruch 1, wobei die Öffnung (8) durch ein Rohr (9) gespeist wird, das mit einem Ansaugschacht (10) verbunden ist, der Luft aus dem Mantelstrom (3) des Turboluftstrahltriebwerks (1) entnimmt.

3. Pylon nach Anspruch 1, wobei die Öffnung (8) durch ein Rohr (9) gespeist wird, das mit einem einem Kompressor des Turboluftstrahltriebwerks (1) nachgelagerten Luftentnahme-Anschlussstutzen verbunden ist.

4. Pylon nach einem der Ansprüche 1 bis 3, wobei Luft mit einem Druck eingespritzt wird, der um mindestens 15 % höher ist als der Gesamtdruck des Gasstroms.

5. Pylon nach einem der Ansprüche 1 bis 4, wobei die Luft in einer Richtung eingespritzt wird, die in der Horizontalen in der Ebene der Öffnung (8) einen zwischen 30° und 90° liegenden Winkel mit der Abströmungsachse des Turboluftstrahltriebwerk umgebenden Gasstroms bildet.

6. Pylon nach einem der Ansprüche 1 bis 5, wobei die Luft in einer Richtung eingespritzt wird, die in der Vertikalen in der Ebene der Öffnung (8) einen zwischen +60° bis -60° liegenden Winkel zur senkrechten Richtung des Seitenteils des Pylons bildet.

7. Pylon nach einem der Ansprüche 1 bis 6, ferner enthaltend mindestens eine Öffnung (8), die an dem Teil seines Seitenteils positioniert ist, der sich außerhalb des Mantelstroms (3) des Turboluftstrahltriebwerks (1) befindet.

8. Pylon nach einem der Ansprüche 1 bis 7, enthaltend mindestens eine an seiner Bodenplatte positionierte Öffnung (8).

9. Pylon nach einem der Ansprüche 1 bis 8, ferner enthaltend eine Verkleidung (20) für einen Anschluss eines seiner Seitenteile an die Düse des Primärstroms (4), wobei der Pylon mindestens eine Öffnung (8) aufweist, die an der Verkleidung positioniert ist.

10. Luftfahrzeug, enthaltend mindestens einen Pylon nach einem der Ansprüche 1 bis 9.

## Claims

1. An aircraft pylon for supporting a double-flow or triple-flow turbojet engine (1), comprising an upper face for connection to the aircraft, two lateral flanks and a sole at its lower part, said pylon comprising at least one part extending downstream of the exit nozzle (5) for the cold flow (3) of said turbojet engine and swept by the cold flow, **characterized in that** it comprises, on its part that extends into the cold flow beyond said exit nozzle, at least one orifice (8) positioned on one of the flanks of said pylon, by means of which orifice a jet of air is injected into, or drawn in from, the flow of gas flowing along its flanks.

2. The pylon as claimed in claim 1, in which the orifice (8) is fed by a tube (9) connected to a scoop (10) bleeding air from the cold flow (3) of the turbojet engine (1).

3. The pylon as claimed in claim 1, in which the orifice (8) is fed by a tube (9) connected to a tapping bleeding air downstream of a compressor of the turbojet engine (1).

4. The pylon as claimed in one of claims 1 to 3, in which the air is injected at a pressure at least 15% higher than the total pressure of said gas flow.

5. The pylon as claimed in one of claims 1 to 4, in which the air is injected in a direction which, horizontally, at said orifice (8), makes an angle of between 30° and 90° with the axis of the gas flow surrounding the turbojet engine.

6. The pylon as claimed in one of claims 1 to 5, in which the air is injected in a direction which, vertically, at said orifice (8), makes an angle of between +60° and -60° with the direction perpendicular to the flank of the pylon.

7. The pylon as claimed in one of claims 1 to 6, further comprising at least one orifice (8) positioned on that part of its flank that is situated outside of the cold flow (3) of the turbojet engine (1).

8. The pylon as claimed in one of claims 1 to 7, comprising at least one orifice (8) positioned on its sole.

9. The pylon as claimed in one of claims 1 to 8, further comprising a connecting fairing (20) connecting one of its lateral flanks to the hot flow exit nozzle (4), said pylon comprising at least one orifice (8) positioned on said fairing.

10. An aircraft comprising at least one pylon as claimed in one of claims 1 to 9.
